# EUROPEAN PATENT SPECIFICATION

(11) **EP 3 048 592 B1**
(45) Date of publication and mention of the grant of the patent: **04.04.2018**
(21) Application number: 14843634.8
(22) Date of filing: 18.02.2014
(51) Int. Cl.: G07F 19/00, G06T 7/80, H04N 5/235

(54) **METHOD, DEVICE, AND SELF SERVICE EQUIPMENT THEREOF FOR CARD PROCESSING IN CARD READER**
VERFAHREN, VORRICHTUNG UND AUTONOME AUSRÜSTUNG DAFÜR ZUR KARTENVERARBEITUNG IN EINEM KARTENLESER
PROCÉDÉ, DISPOSITIF, ET ÉQUIPEMENT DE LIBRE-SERVICE POUR TRAITEMENT DE CARTE DANS UN LECTEUR DE CARTE

(30) Priority: 16.09.2013 CN 201310422178
(43) Date of publication of application: 27.07.2016
(73) Proprietor: GRG Banking Equipment Co., Ltd., Guangzhou, Guangdong 510663 (CN)
(72) Inventor: XIAO, Dahai, Guangzhou Guangdong 510663 (CN); OUYANG, Xiaoming, Guangzhou Guangdong 510663 (CN); WANG, Qinghua, Guangzhou Guangdong 510663 (CN); DONG, Xuewen, Guangzhou Guangdong 510663 (CN); YONG, Rong, Guangzhou Guangdong 510663 (CN); HUANG, Wanqi, Guangzhou Guangdong 510663 (CN)
(74) Representative: Maiwald Patentanwalts GmbH
(86) International application number: PCT/CN2014/072174
(87) International publication number: WO 2015/035749

(56) References cited:
- EP-A1- 1 139 309
- EP-A2- 0 780 814
- CN-A- 101 527 064
- CN-A- 101 551 926
- CN-A- 101 645 183
- CN-A- 101 751 727
- CN-A- 103 456 092
- DE-A1-102009 018 322
- JP-A- 2007 279 877
- US-A1- 2013 161 388

## Description

### CROSS REFERENCE TO RELATED APPLICATION

The present application claims the priority to Chinese Patent Application No.201310422178.0, titled "METHOD, DEVICE, AND SELF SERVICE EQUIPMENT THEREOF FOR CARD PROCESSING IN CARD READER", filed on September 16, 2013 with the State Intellectual Property Office of the People's Republic of China, the entire content of which is incorporated herein by reference.

### TECHNICAL FIELD

The present disclosure relates to the technical field of financial self-service terminals, in particular to a method and a device for processing a card in a card reader and a self-service device thereof.

### BACKGROUND

An ATM (Automated Teller Machine, ATM) is a common financial self-service device in the daily life. For most self services implemented on a self-service device, such as depositing with a card, withdrawing with a card, check, password modification and transfer, a bank card is needed. During a self service, it should be ensured by a user that at least one of bank card information and password information is not leaked. For example, during the self-service, it should be ensured by the user that an operating right is not obtained by others after a password is correctly entered and before the bank card is returned. A conventional self-service device can not effectively solve the above problem, and may encounter the following problem.

In a case that the user is about to use the self service, he or she needs to insert the card into a card reader and enter the password, and then transactions can be conducted on an interface. In a transaction process, a criminal may insert a counterfeit card into a card processing slot of the card reader to pass it off as the real card of the user, and then lie to the user that the service is completed and the card is returned. In this case, the user may mistakenly think that his or her card is returned since there is indeed a card in the card processing slot of the card reader, and leave the self-service device with the counterfeit card, willingly or not. Actually, the card of the user remains in the card reader, so that the criminal can continue the transactions to withdraw cash in the card of the user since the password has been correctly entered by the user. As described above, in a case that a card is inserted in the card processing slot of the card reader when there is already a card in the card reader of the self-service device, the self-service device provides no prompt and takes no action. At present, by utilizing such a feature of the self-service device, the criminal can substitute the bank card when the business is used by the user, so as to steal the cash in the bank card of the user, which causes a security risk to the self-service device.

Therefore, the conventional self-service device needs to be improved, so as to effectively prevent the bank card of the user from being substituted, thereby preventing a business operating right from being obtained by the criminal which causes a security risk to the cash in the card of the user.

EP 1,139,309 describes a self-service terminal for preventing fraud and a module for use in a fraud-resistant self-service terminal (SST). The SST comprises a fascia defining a card entry slot, and a card reader module located behind the card entry slot. The SST further comprises a terminal shutter operable to cover the card entry slot, and sensors for detecting the location of a card within the module. If the sensors detect a card within the module that cannot be transported then the SST operates the shutter to cover the card entry slot and prevent access to the card.

### SUMMARY

The present disclosure is to provide a method and a device for processing a card in a card reader and a self-service device, so as to facilitate a user to see through a fraud of stealthily substituting a bank card in time, and to prevent a business operating right from being obtained by others, when a business operation is carried out by the self-service device for the user, thereby increasing the security and the intelligence of the self-service device and ensuring the security of user property.

To achieve the above object, the following technical solutions are provided according to the present disclosure.

A method for processing a card in a card reader, applied to a self-service device, including:
detecting a state of the card reader in a realtime manner, when the card is used by a user to carry out a business transaction;
generating, by the card reader, an event that there is a counterfeit card in a card entrance slot, and sending the event to a self-service business system in a realtime manner, once a counterfeit card is detected in a card processing slot of the card reader, so as to enable the self-service business system to provide warning information, suspend a current business and enter a procedure of user authentication; and
continuing the current business, in a case that the user authentication performed in a preset period of time is successful.

Specifically, a function of detecting the counterfeit card in the card processing slot implemented by a second detection module of the card reader may be realized by a module for detecting a magnetic signal or a module for detecting a presence of a counterfeit card which is provided by a detection device in the card reader, or be realized by a device in the card reader for detecting a foreign body in the card processing slot.

Specifically, the warning information may be generated by the card reader based on results of two detection modules of the card reader, or be generated by the self-service business system based on the detection results of the two detection modules sent by the card reader.

Specifically, the user authentication may require the user to re-enter a password or biometric information such a fingerprint, or other well known means of authenticating the user which are provided by the self-service business system, such as mobile phone verification and USB key verification.

A device for processing a card in a card reader, applied to a self-service device, including:
a first detection module and a second detection module, configured to detect whether there is a card in the interior of the card reader and whether there is a counterfeit card in a card entrance slot, and send a detection result to a determining and analyzing module;
the determining and analyzing module, configured to receive the detection result of the first detection module and the second detection module, and send warning information to a self-service business system and a warning module respectively in a case that the first detection module detects a card and the second detection module detects a counterfeit card when a business operation is carried out by the self-service business system;
the warning module, configured to convey the warning information to the user by means of screen displaying or voice prompting;
the self-service business system, configured to receive the warning information, suspend a current business and call a user authentication module to perform user authentication; and
the user authentication module, configure to perform a procedure of the user authentication, and send information to the self-service business system to allow the self-service business system to continue the current business in a case that the user authentication is successful, or, allow the self-service business system to terminate the current business to return or retain the card in a case that the user authentication performed by the user authentication module in a preset period of time is not successful.

It can be seen from the above technical solutions that, based on the method and the device for processing the card in the card reader and the self-service device, it is constantly detected whether there is a card in the card processing slot of the card reader when a card is already detected in the card reader; in a case that a card is detected in the card processing slot, the user is prompted with a warning to avoid that the card is substituted, the current business is suspended, the user is required to perform the user authentication, and an interface of a self service is switched to an interface on which the password is to be entered; and the current business may be continued in a case that the password is correctly entered by the user in the preset time. The above solutions can effectively avoid the following situation: when the self service is used by the user, the criminal may insert a counterfeit card into the card reader to pass it off as the card of the user, so as to trick the user into handing over the business operating right which causes a financial loss to the user. The security of the self service is increased according to the present solutions.

### BRIEF DESCRIPTION OF THE DRAWINGS

In order to more clearly illustrate technical solutions in embodiments of the present disclosure or in the conventional technology, drawings used in the description of the embodiments or the conventional technology are introduced briefly hereinafter. Apparently, the drawings described in the following illustrates some embodiments of the present disclosure, other drawings may be obtained by those ordinarily skilled in the art based on these drawings without any creative efforts.
Figure 1 is a flow chart of a method for processing a card in a card reader according to an embodiment of the present disclosure;
Figure 2 is a schematic structural diagram of a device for processing a card in a card reader according to an embodiment of the present disclosure;
Figure 3 is a flow chart of switching two operation modes of a device in a card reader for detecting a foreign body according to an embodiment of the present disclosure; and
Figure 4 is a flow chart of a method for controlling switching of operation modes of a device in a card reader for detecting a foreign body according to an embodiment of the present disclosure.

### DETAILED DESCRIPTION OF THE EMBODIMENTS

The technical solutions in embodiments of the present disclosure are clearly and completely described hereinafter in conjunction with the drawings in the embodiments of the present disclosure. Apparently, the described embodiments are only a few of the embodiments of the present disclosure. Based on the embodiments of the present disclosure, all other embodiments obtained by those ordinarily skilled in the art without any creative efforts fall within the protection scope of the present disclosure.

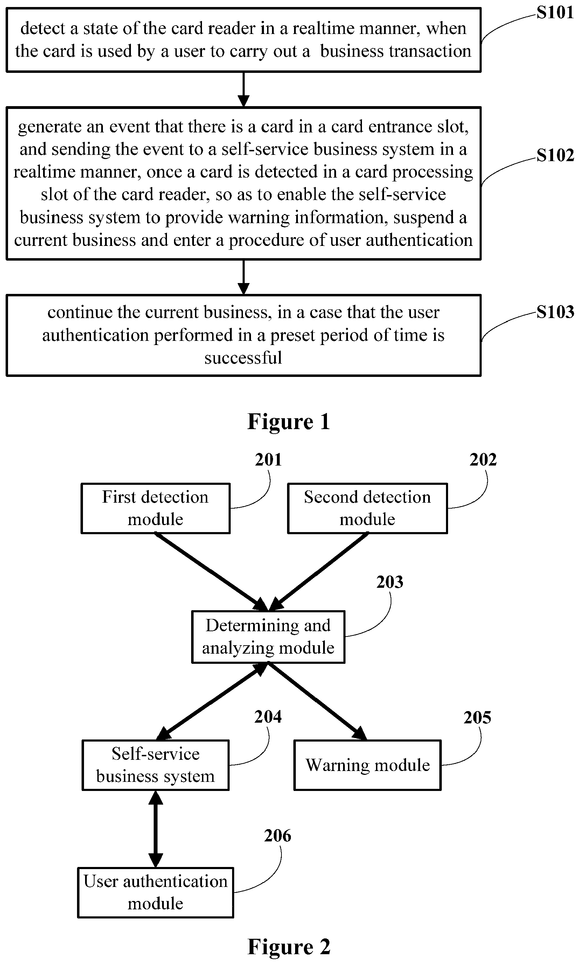

Reference is made to Figure 1, which illustrates a flow chart of a method for processing a card in a card reader according to an embodiment of the present disclosure. The steps of the method are described as follows.

In step S101, a state of the card reader is detected in a realtime manner, when the card is used by a user to carry out a business transaction.

When the card is used by the user for the self service, if the card is in the card reader, the self-service device operates in a normal service state. A case that the card in the card reader is not returned or is retained due to a failure in the card reader, i.e., a case that the self-service device does not operate in the normal service state, is not taken into account by the present solutions.

According to the conventional technology, when the self-service device operates in the service state and there is a card in the card reader, an event that there is a card or a foreign body in a card processing slot will not be sent to a self-service business system or be processed by the card reader in a case that the card or the foreign body is detected in the card processing slot of the card reader. In practice, when a self service is used by the user, a criminal may insert a counterfeit card into the card processing slot of the card reader to trick the user into handing over a business operating right. In the conventional technology, the self-service device provides no prompts to the user, and takes no security measures to ensure the security of capital in an account of the user.

Preferably, in order to detect whether there is a card in a card entrance slot of the card reader, a means of using a card processing function provided by a hardware component of the card reader which accepts the card based on a presence of the card or based on a magnetic signal of the card may be used, and an event that a card is detected in the card entrance slot may be sent to the self-service business system by the card reader immediately.

In addition, in order to detect whether there is a card in a card entrance slot of the card reader, a means of using a foreign body detection function of the card reader may be used. Compared with the conventional technology, the improvement is that an event that a foreign body is detected is sent to the self-service business system by the card reader immediately after the foreign body is detected by the card reader during the business. In the conventional technology, it may take a long time (such as longer than 5 minutes) to detect the foreign body. In the conventional technology, it may take a long time (such as longer than 5 minutes) to detect the foreign body, which is to avoid temporary disruption such as inserting another card, and a device for detecting the foreign body which is arranged at the card entrance slot of the card reader is to detect whether there is a card stealing device for stealing information of the card at the card entrance slot of the card reader.

In step S102, the event that there is a card in the card entrance slot is generated, and the event is sent to the self-service business system in a realtime manner, once the card is detected in the card processing slot of the card reader, so as to enable the self-service business system to provide warning information, suspend a current business and enter a procedure of user authentication.

When the business is operated by the user, once a card is detected in the card entrance slot of the card reader, the event is sent to the self-service business system by the card reader in time and the user is reminded by the self-service business system in time to prevent the card from being substituted, so as to avoid the following situation: when the business is operated by the user, the criminal may insert the counterfeit card into the card entrance slot of the card reader to pass it off as the card of the user, so as to trick the user into handing over the business operating right.

The providing warning information includes reminding the user to prevent the card from being substituted and so on, and may be implemented by means of screen displaying or voice prompting.

The current business is suspended by the self-service business system and the procedure of the user authentication is started. In a case that an operation result of the current business will not cause a change to the capital in the account of the user or a password of the user, for example, in a case that the current business is a check business, the procedure of the user authentication may be started after the business is completed or a predetermined time limit is exceeded by the current business. In a case that an operation result of the current business will cause a change to the capital in the account of the user or the password of the user, for example, in a case that the current business is a password modification business or a transfer business, the current business is suspended immediately and the procedure of the user authentication is started.

In step S103, the current business is continued in a case that the user authentication performed in a preset period of time is successful.

It should be noted that, in a case that the user authentication is not successful, the current business is terminated by the self-service business system, and the business is ended by returning or retaining the card.

Specifically, for the user authentication described above, if the password is not entered by the user in the preset time or the password is mistakenly entered for three times, the current business is terminated and the card is returned or retained.

Specifically, for the terminating the business described above, in a case that an amount of capital is successfully deducted from the account and banknotes do not come out during a withdrawing business, a process of reverse of withdrawing needs to be started to balance the account. In a case that banknote counting is not finished during a depositing business, banknotes are retained and are not conveyed to a banknote outlet.

Reference is made to Figure 2, which is a schematic structural diagram of a device for processing a card in a card reader according to an embodiment of the present disclosure, corresponding to the method embodiment. The device includes: a first detection module 201, a second detection module 202, a determining and analyzing module 203, a self-service business system204, a warning module 205 and a user authentication module 206.

The first detection module 201 and the second detection module 202 are configured to detect whether there is a card in the interior of the card reader and whether there is a card in a card entrance slot respectively, and send a detection result to the determining and analyzing module 203. In a case that the detection result received by the determining and analyzing module 203 indicates that each of the first detection module 201 and the second detection module 202 detects a card when a business operation is carried out by the self-service business system, warning information is sent to the self-service business system 204 and the warning module 205 respectively by the determining and analyzing module 203. The warning information is conveyed to a user by means of screen displaying or voice prompting by the warning module 205. Once receiving the warning information, the self-service business system 204 suspends a current business and calls the user authentication module 206 to perform user authentication. The user enters his or her identity information via the user authentication module 206. Information is sent to the self-service business system 204 to allow the self-service business system 204 to continue the current business in a case that the user authentication performed by the user authentication module 206 is successful. The self-service business system 204 terminates the current business to return or retain the card in a case that the result that the user authentication module 206 performs the user authentication in a preset time is not successful.

The second detection module 202 may be a module with a card processing function provided by a hardware component of the card reader which accepts a card based on a presence of the card or based on a magnetic signal of the card, or a functional module in the card reader for detecting a foreign body.

Preferably, the user authentication module 206 may be a functional module which requires the user to re-enter a password of an account to perform the user authentication.

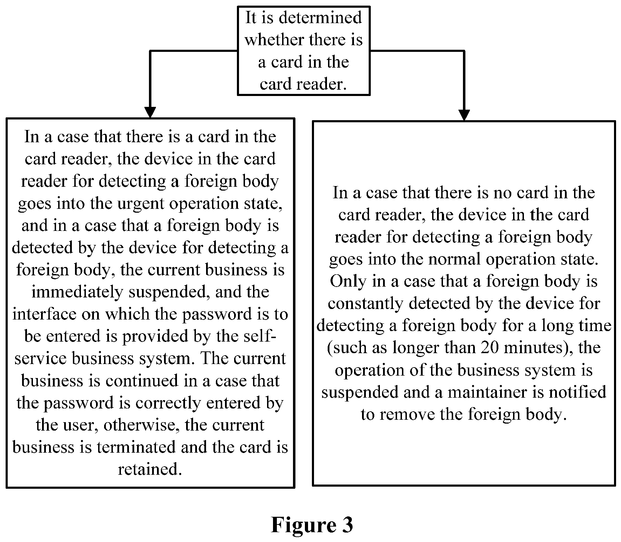

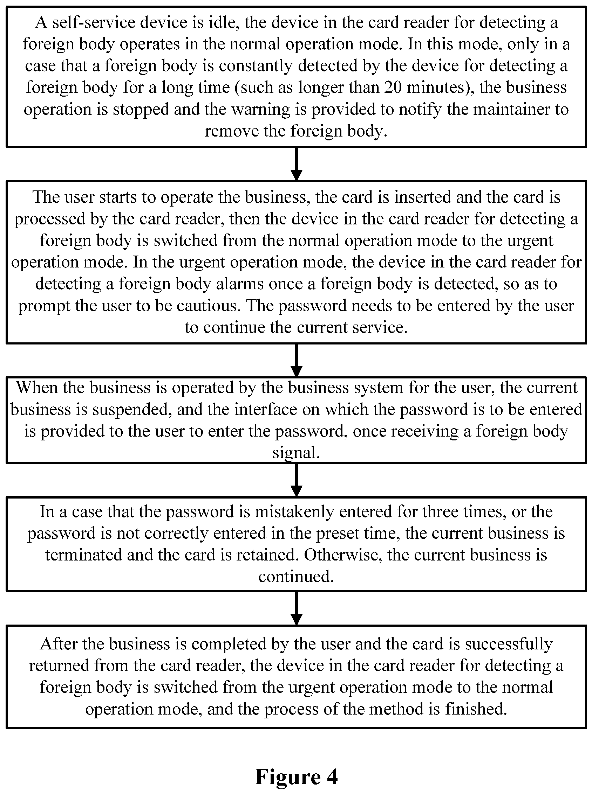

Figure 3 and Figure 4 illustrate a method for processing a card with a device in a card reader for detecting a foreign body.

A conventional device in a card reader for detecting the foreign body is developed to avoid that a card stealing device is added to the card reader by a criminal to illegally obtain information of the card of a user. The device in the card reader for detecting the foreign body alarms and determines that the card reader is sheltered by the foreign body only in a case that the foreign body is constantly detected for a long time (such as half an hour, and preferably longer than time required for operating a business). The device in the card reader for detecting the foreign body does not alarm in a case that the foreign body is constantly detected for a short time. For example, if the card is being returned, there is a timeout about 2 to 3 minutes for taking away the card, after the card is returned to a card taking slot and before the card is retained. It is detected by device in the card reader for detecting the foreign body that there is a foreign body in the card taking slot during the timeout. In fact, in this case, the card is accepted or returned normally, so that no warning information is sent, and no signal which indicates that there is an abnormality in the card reader is sent to the self-service business system.

In the embodiment, when the business is operated by the user, in a case that the card of the user is in the card reader and a foreign body is detected by the device in the card reader for detecting the foreign body, a warning is generated. And the user is required to re-enter a password if the card in the card reader is used to operate a withdrawing business or a transfer business. In this case, based on the warning, the user is prompted to be cautious and a criminal is deterred; based on requiring the user to re-enter the password to carry out a cash transaction, the security of capital of the user is ensured, and no loss is caused even if the user is tricked. That is, as long as the card is in the card reader, when another card is inserted into a specially shaped slot, the password needs to be re-entered if the card in the card reader is used to carry out the cash transaction, which ensures the security of the capital of the user even if the card is substituted.

The method for processing a card based on a foreign body detection function of the card reader according to the embodiment may include the following steps.
1) If a foreign body is detected by the device in the card reader for detecting the foreign body, then the process of the method goes to step 2) in a case that there is a card in the card reader; otherwise, the process of the method is finished with no processing.
2) In a case that the current business is a withdrawing business or a transfer business, the current business is suspended, an interface on which the password is to be entered is provided. The current business is continued and the process of the method is finished if the password is correctly entered by the use in a preset time; otherwise, the process of the method goes to step 3).
3) In a case that the current business is not the withdrawing business or the transfer business, the current business is continued. The user is required to re-enter the password if the card in the card reader is used to operate the withdrawing business or the transfer business, and the current business is continued and the process of the method is finished if the password is correctly entered by the use in a preset time.

Preferably, during the business, if a state of the device for detecting the foreign body is switched from a state in which no foreign body is detected to a state in which a foreign body is detected, then a security control system according to the present solutions will work.

In the embodiment, operation states of the device in the card reader for detecting the foreign body are divided into two types: a normal operation mode and an urgent operation mode.

The normal operation mode refers to an operation state in which a foreign body in the card reader is detected in the conventional technology. If the device for detecting the foreign body operates in this state, a signal is not immediately sent to a monitoring system and the self-service business system to report that there is a foreign body in the card reader in a case that a foreign body is detected in the card reader. Only if a foreign body is constantly detected for a long time, such as 20 minutes or even much longer, it can be determined by the monitoring system of a self-service terminal that a foreign body is added to the card reader. The cumulative time needs to be reset and recounted once the foreign body disappears. Therefore, normal cases in which a foreign body is detected can be identified: a case that a foreign body is detected by the device for detecting the foreign body due to a bank card temporarily passing a card entrance or exit slot, which is caused by inserting the card, processing the card, returning the card or taking away the card when the business is operated by the user.

The urgent operation mode is a newly added operation state according to the present solutions. If the device for detecting the foreign body operates in this state, in a case that a foreign body is detected in the card reader, a signal is immediately sent to the self-service business system to report that there is a foreign body in the card reader, and the self-service business system suspends the current business and goes into an emergency processing mode.

A precondition for the device in the card reader for detecting the foreign body to operate in this operation state is that there is already a bank card in the card reader to carry out a business operation. After the password is correctly entered by the user, the device for detecting the foreign body starts to operate in this operation state, until the business is completed and the card is successfully returned.

In the embodiment, a process of switching the two operation modes of the device in the card reader for detecting the foreign body is as follows.
1) It is determined whether there is a card in the card reader.
2) In a case that there is a card in the card reader, the device in the card reader for detecting the foreign body goes into the urgent operation state. And in a case that a foreign body is detected by the device for detecting the foreign body, the current business is immediately suspended, and the interface on which the password is to be entered is provided by the self-service business system. The current business is continued in a case that the password is correctly entered by the user, otherwise, the current business is terminated and the card is retained.
3) In a case that there is no card in the card reader, the device in the card reader for detecting the foreign body goes into the normal operation state. Only in a case that a foreign body is constantly detected by the device for detecting the foreign body for a long time (such as longer than 20 minutes), the operation of the business system is suspended and a maintainer is notified to remove the foreign body.

In the embodiment, a process of a method for controlling switching of foreign body detection of a card reader is as follows.
1) A self-service device is idle and no business is being performed, the device in the card reader for detecting the foreign body operates in the normal operation mode. In this mode, only in a case that a foreign body is constantly detected by the device for detecting the foreign body for a long time (such as longer than 20 minutes, which may be set based on an actual situation), the business operation is stopped and the warning is sent to notify the maintainer to remove the foreign body.
   The warning is sent in a case that a foreign body is constantly detected for a long time, instead of being sent immediately after a foreign body is detected. This is due to requirements of normal business operations such as inserting the card and taking away the card. During these business operations, a foreign body may also be detected, which is because of normal operation.
   When the device in the card reader for detecting the foreign body operates in the operation mode, the warning is provided to notify the maintainer. In this case, the device for detecting the foreign body alarms due to the fact that the card stealing device which can steal the information of the card of the user may be added to the card reader by the criminal. Then the maintainer may remove the foreign body.
2) The user starts to operate the business, the card is inserted and the card is processed by the card reader. Then the device in the card reader for detecting the foreign body is switched from the normal operation mode to the urgent operation mode. In the urgent operation mode, the device in the card reader for detecting the foreign body alarms once a foreign body is detected, so as to prompt the user to be cautious. The password needs to be entered by the user to continue the current business.
   When the device in the card reader for detecting the foreign body operates in the urgent mode, the warning is provided to notify the user that operates the self service, instead of notifying the maintainer. In this case, the device for detecting the foreign body alarms due to the fact that a foreign body such as a counterfeit card may be inserted in the card processing slot of the card reader to trick the user and disturb operations of the user, and not due to the fact that the card stealing device which can steal the information of the card of the user may be added.
3) When the business is operated by the business system for the user, the current business is suspended, and the interface on which the password is to be entered is provided to the user to enter the password, once receiving a foreign body signal.
   When the device in the card reader for detecting the foreign body operates in the urgent mode, the user is required to re-enter the password to continue the current business. In this case, even if the user is tricked into leaving the self-service device, the card can not be used by other people to carry out a business, which ensure the security of the capital of the user.
4) In a case that the password is mistakenly entered for three times, or the password is not correctly entered in a preset time, the current business is terminated and the card is retained. In a case that the password is correctly entered by the user, the current business is continued.
5) After the business is completed by the user and the card is successfully returned from the card reader, the device in the card reader for detecting the foreign body is switched from the urgent operation mode to the normal operation mode, and the process of the method is finished.

It can be understood by those skilled in the art that, drawings are only used to illustrate the embodiments, units or processes according to the drawings are not necessary for the embodiments of the present disclosure.

It should be understood that the disclosed systems, devices and methods according to some embodiments of the present disclosure may be implemented in other ways. For example, the device embodiments described above are illustrative only. For example, the unit division is merely logical function division and may be other division in actual implementation. For example, multiple units or components may be combined or integrated into another system, or some features may be ignored or not performed. In addition, the displayed or discussed mutual couplings, direct couplings or communication connections may be implemented via some interfaces. The indirect couplings or communication connections between the devices or units may be implemented in electronic, mechanical or other forms.

The units described as separate parts may or may not be physically separate, and parts displayed as units may or may not be physical units, which may be located in one position or distributed on multiple network units. A part or all of the units may be selected to achieve the object of solutions in the embodiments of the present disclosure based on practical requirements.

In addition, the functional units in the embodiments of the present disclosure may be integrated into a processing unit, or be separately included in units, or, two or more units may be integrated into a unit. The above integrated unit may be implemented in a hardware form or a form of a combination of hardware and a software functional unit.

The above integrated unit implemented in the form of the software functional unit may be stored in a computer readable storage medium. The above software functional unit is stored in a storage medium which includes several instructions to make a computer device (which may be a personal computer, a server or a network device, etc.) to execute all or some of the steps in the methods according to the embodiments of the present disclosure. The above storage medium may be a USB flash disk, a mobile hard disk, a read-only memory (Read-Only Memory, ROM), a random access memory (Random Access Memory, RAM) or other medium that can store program codes such as an optical disk or a magnetic disk.

## Claims

1. A method for processing a card in a card reader, comprising:
detecting (S101) a state of the card reader in a realtime manner, when the card is used by a user to carry out a business transaction;
generating (S102), by the card reader, an event that there is a counterfeit card in a card entrance slot, and sending the event to a self-service business system in a realtime manner, once the counterfeit card is detected in a card processing slot of the card reader, so as to enable the self-service business system to provide warning information, suspend the business and enter a procedure of user authentication; and
continuing (S103) the business, in a case that the user authentication performed in a preset period of time is successful.

2. The method according to claim 1, wherein the detecting (S101) a state of the card reader in a realtime manner comprises:
detecting whether there is a counterfeit card in the card entrance slot of the card reader, based on a card processing function provided by a hardware component of the card reader which accepts the counterfeit card based on a presence of the counterfeit card or based on a magnetic signal of the counterfeit card.

3. The method according to claim 1, wherein the detecting (S101) a state of the card reader in a realtime manner comprises:
detecting whether there is a counterfeit card in the card entrance slot of card reader, based on a foreign body detection function of the card reader.

4. The method according to claim 3, wherein the detecting whether there is a counterfeit card in the card entrance slot of the card reader based on a foreign body detection function of the card reader comprises:
when no business is operated, a device in the card reader for detecting a foreign body operates in a normal operation mode, and if a foreign body is constantly detected by the device for detecting a foreign body for a preset time, the business is suspended and warning information is provided;
when the business is operated, the device in the card reader for detecting the foreign body is switched from the normal operation mode to an urgent operation mode, and the device for detecting the foreign body alarms once a foreign body is detected.

5. The method according to any one of claims 1 to 4, further comprising:
in a case that an operation result of the business does not cause a change to capital in an account of the user or a password of the user, the procedure of the user authentication is entered after the business is completed or a predetermined time limit is exceeded by the business;
in a case that the operation result of the business causes a change to the capital in the account of the user or the password of the user, the business is suspended immediately and the procedure of the user authentication is entered.

6. The method according to claim 1, further comprising:
terminating the business to return or retain the card, in a case that the user authentication performed in the preset period of time is not successful.

7. A device for processing a card in a card reader, comprising:
a first detection module (201) and a second detection module (202), configured to detect whether there is a card in the interior of the card reader and whether there is a counterfeit card in a card entrance slot respectively, and send a detection result to a determining and analyzing module (203);
the determining and analyzing module (203), configured to receive the detection result of the first detection module (201) and the second detection module (202), and send warning information to a self-service business system and a warning module respectively in a case that the first detection module (201) detects a card and the second detection module (202) detects a counterfeit card when a business operation is carried out by the self-service business system;
the warning module (205), configured to convey the warning information to the user by means of screen displaying or voice prompting;
the self-service business system (204), configured to receive the warning information, suspend the business and call a user authentication module (206) to perform user authentication; and
the user authentication module (206), configure to perform a procedure of the user authentication, and send information to the self-service business system (204) to allow the self-service business system (204) to continue the business in a case that the user authentication is successful, or, allow the self-service business system (204) to terminate the business to return or retain the card in a case that the user authentication performed by the user authentication module (206) in a preset period of time is not successful.

8. The device according to claim 7, wherein the second detection module (202) is a module with a card processing function provided by a hardware component of the card reader which accepts the counterfeit card based on a presence of the counterfeit card or based on a magnetic signal of the counterfeit card, or a functional module in the card reader for detecting a foreign body.

9. The device according to claim 7 or 8, wherein the user authentication module (206) is a functional module which requires the user to re-enter a password of an account to perform the user authentication.

## Patentansprüche

1. Verfahren zur Verarbeitung einer Karte in einem Kartenleser, umfassend:
Erkennen (S101) eines Status des Kartenlesers in Echtzeit, wenn die Karte von einem Benutzer zum Durchführen einer Geschäftstransaktion benutzt wird;
Erstellen (S 102), durch den Kartenleser, eines Ereignisses, dass eine gefälschte Karte in einem Karteneinsteckschlitz ist, und Senden des Ereignisses in Echtzeit an ein autonomes Geschäftssystem, sobald die gefälschte Karte im Kartenverarbeitungsschlitz des Kartenlesers erkannt wird, um zu ermöglichen, dass das autonome Geschäftssystem Warninformation bereitstellt, ein Geschäft aussetzt und in eine Benutzerauthentifizierungsprozedur eintritt; und
Fortsetzen (S103) des Geschäfts in einem Fall, in dem die Benutzerauthentifizierung, die in einem voreingestellten Zeitraum durchgeführt wird, erfolgreich ist.

2. Verfahren nach Anspruch 1, wobei das Erkennen (S101) eines Zustands des Kartenlesers in Echtzeit folgendes umfasst:
Erkennen, ob eine gefälschte Karte im Karteneinsteckschlitz des Kartenlesers ist, auf Grundlage einer Kartenverarbeitungsfunktion, die durch eine Hardware-Komponente des Kartenlesers vorgesehen ist, welche die gefälschte Karte auf Grundlage des Vorhandenseins der gefälschten Karte oder auf Grundlage eines Magnetsignals der gefälschten Karte annimmt.

3. Verfahren nach Anspruch 1, wobei das Erkennen (S101) eines Zustands des Kartenlesers in Echtzeit folgendes umfasst:
Erkennen, ob eine gefälschte Karte im Karteneinsteckschlitz des Kartenlesers ist, auf Grundlage einer Fremdkörpererkennungsfunktion des Kartenlesers.

4. Verfahren nach Anspruch 3, wobei das Erkennen, ob eine gefälschte Karte im Karteneinsteckschlitz des Kartenlesers ist, auf Grundlage einer Fremdkörpererkennungsfunktion des Kartenlesers folgendes umfasst:
wenn kein Geschäft getätigt wird, arbeitet eine Vorrichtung im Kartenleser zum Erkennen eines Fremdkörpers in einem Normalbetriebsmodus, und wenn ein Fremdkörper fortlaufend durch die Vorrichtung zum Erkennen eines Fremdkörpers über eine voreingestellte Zeit erkannt wird, wird das Geschäft ausgesetzt und Warninformation vorgesehen;
wenn das Geschäft getätigt wird, wird die Vorrichtung im Kartenleser zum Erkennen des Fremdkörpers aus dem Normalbetriebsmodus zu einem Notbetriebsmodus umgeschaltet, und die Vorrichtung zum Erkennen des Fremdkörpers warnt, sobald ein Fremdkörper erkannt wird.

5. Verfahren nach einem der Ansprüche 1 bis 4, ferner umfassend:
in einem Fall, in dem ein Tätigkeitsergebnis des Geschäfts keine Änderung an Kapital auf einem Konto des Benutzers oder an einem Passwort des Benutzers verursacht, wird in die Benutzerauthentifizierung eingetreten, nachdem das Geschäft abgeschlossen oder eine vorbestimmte Zeitgrenze durch das Geschäft überschritten wurde;
in einem Fall, in dem ein Tätigkeitsergebnis des Geschäfts eine Änderung am Kapital auf dem Konto des Benutzers oder am Passwort des Benutzers verursacht, wird das Geschäft sofort ausgesetzt und in die Benutzerauthentifizierung eingetreten.

6. Verfahren nach Anspruch 1, ferner umfassend:
Beenden des Geschäfts zum Zurückgeben oder Einbehalten der Karte in einem Fall, in dem die Benutzerauthentifizierung, die im voreingestellten Zeitraum durchgeführt wird, nicht erfolgreich ist.

7. Vorrichtung zur Verarbeitung einer Karte in einem Kartenleser, umfassend
ein erstes Erkennungsmodul (201) und ein zweites Erkennungsmodul (202), die zum Erkennen, ob eine Karte im Inneren des Kartenlesers ist bzw. ob eine gefälschte Karte in einem Karteneinsteckschlitz ist, und zum Senden eines Erkennungsergebnisses an ein Bestimmungs- und Analysemodul (203) konfiguriert sind;
das Bestimmungs- und Analysemodul (203), das zum Empfangen des Erkennungsergebnisses des ersten Erkennungsmoduls (201) und des zweiten Erkennungsmoduls (202) und zum Senden von Warninformation an ein autonomes Geschäftssystem bzw. ein Warnmodul in einem Fall, in dem das erste Erkennungsmodul (201) eine Karte erkennt und das zweite Erkennungsmodul (202) eine gefälschte Karte erkennt, wenn eine Geschäftstätigkeit durch das autonome Geschäftssystem durchgeführt wird, konfiguriert ist;
das Warnmodul (205), das zum Weiterleiten der Warninformation an den Benutzer durch Bildschirmanzeige- oder Sprachabfragemittel konfiguriert ist;
das autonome Geschäftssystem (204), das zum Empfangen der Warninformation, Aussetzen eines laufenden Geschäfts und Aufrufen eines Benutzerauthentifizierungsmoduls (206) zum Durchführen von Benutzerauthentifizierung konfiguriert ist; und
das Benutzerauthentifizierungsmodul (206), das zum Durchführen einer Prozedur der Benutzerauthentifizierung und zum Senden von Information zum autonomen Geschäftssystem (204), um es dem autonomen Geschäftssystem (204) zu ermöglichen, das laufende Geschäft in einem Fall fortzusetzen, in dem die Benutzerauthentifizierung erfolgreich ist, oder um es dem autonomen Geschäftssystem (204) zu ermöglichen, das Geschäft zum Zurückgeben oder Einbehalten der Karte in einem Fall abzuschließen, in dem die Benutzerauthentifizierung durch das Benutzerauthentifizierungsmodul (206) in einem voreingestellten Zeitraum nicht erfolgreich ist, konfiguriert ist.

8. Vorrichtung nach Anspruch 7, wobei das zweite Erkennungsmodul (202) ein Modul mit einer Kartenverarbeitungsfunktion, die durch eine Hardware-Komponente des Kartenlesers vorgesehen ist, welche die gefälschte Karte auf Grundlage eines Vorhandenseins der gefälschten Karte oder auf Grundlage eines Magnetsignals der gefälschten Karte annimmt, oder ein Funktionsmodul im Kartenleser zum Erkennen eines Fremdkörpers ist.

9. Vorrichtung nach einem der Ansprüche 7 oder 8, wobei das Benutzerauthentifizierungsmodul (206) ein Funktionsmodul ist, das vom Benutzer anfordert, das Passwort eines Kontos zum Durchführen der Benutzerauthentifizierung erneut einzugeben.

## Revendications

1. Un procédé pour le traitement d'une carte dans un lecteur de carte, comprenant :
le fait (S101) de détecter un état du lecteur de carte en temps réel, lorsque la carte est utilisée par un utilisateur pour effectuer une transaction commerciale ;
le fait (S 102) de générer, par le lecteur de carte, un événement selon lequel il y a une carte contrefaite dans une fente d'entrée de carte et d'envoyer l'événement à un système de gestion du libre-service en temps réel, une fois que la carte contrefaite est détectée dans une fente de traitement de carte du lecteur de carte, de manière à permettre au système de gestion du libre-service de fournir une information d'avertissement, de suspendre l'activité et d'entrer dans une procédure d'authentification de l'utilisateur ; et
le fait (S 103) de poursuivre l'activité dans un cas où l'authentification de l'utilisateur effectuée dans une période de temps prédéfinie aboutit à une authentification.

2. Le procédé selon la revendication 1, dans lequel le fait (S101) de détecter un état du lecteur de carte en temps réel comprend :
le fait de détecter s'il existe une carte contrefaite dans la fente d'entrée de carte du lecteur de carte sur la base d'une fonction de traitement de carte fournie par un composant matériel du lecteur de carte qui accepte la carte contrefaite sur la base d'une présence de la carte contrefaite ou sur la base d'un signal magnétique de la carte contrefaite.

3. Le procédé selon la revendication 1, dans lequel le fait (S101) de détecter un état du lecteur de carte en temps réel comprend :
le fait de détecter s'il y a une carte contrefaite dans la fente d'entrée de carte du lecteur de carte sur la base d'une fonction de détection de corps étranger du lecteur de carte.

4. Le procédé selon la revendication 3, dans lequel le fait de détecter s'il y a une carte contrefaite dans la fente d'entrée de carte du lecteur de carte sur la base d'une fonction de détection de corps étranger du lecteur de carte comprend :
lorsqu'aucune activité n'est mise en oeuvre, un dispositif dans le lecteur de carte pour détecter un corps étranger fonctionne dans un mode de fonctionnement normal, et, si un corps étranger est détecté de façon constante par le dispositif pour détecter un corps étranger pendant un temps prédéterminé, l'activité est suspendue et une information d'avertissement est fournie ;
lorsque l'activité est mise en oeuvre, le dispositif dans le lecteur de carte pour détecter le corps étranger passe du mode de fonctionnement normal à un mode de fonctionnement urgent et le dispositif pour détecter le corps étranger produit une alarme une fois qu'un corps étranger est détecté.

5. Le procédé selon l'une quelconque des revendications 1 à 4, comprenant en outre :
dans le cas où un résultat de mise en oeuvre de l'activité n'entraîne pas de changement de capital dans un compte de l'utilisateur ou d'un mot de passe de l'utilisateur, la procédure d'authentification de l'utilisateur est entrée après l'achèvement de l'activité ou après le dépassement par l'activité d'une limite de temps prédéterminée ;
dans le cas où le résultat de mise en oeuvre de l'activité entraîne une modification du capital dans le compte de l'utilisateur ou du mot de passe de l'utilisateur, l'activité est immédiatement suspendue et la procédure d'authentification de l'utilisateur est entrée.

6. Le procédé selon la revendication 1, comprenant en outre :
le fait de mettre fin à l'activité pour rendre ou conserver la carte, dans le cas où l'authentification de l'utilisateur effectuée dans la période de temps prédéfinie n'a pas abouti à une authentification.

7. Un dispositif pour traiter une carte dans un lecteur de carte comprenant :
un premier module de détection (201) et un deuxième module de détection (202) configurés pour détecter respectivement s'il y a une carte à l'intérieur du lecteur de carte et s'il y a une carte contrefaite dans une fente d'entrée de carte, et pour envoyer un résultat de détection à un module (203) de détermination et d'analyse ;
le module (203) de détermination et d'analyse étant configuré pour recevoir le résultat de détection du premier module de détection (201) et du deuxième module de détection (202) et envoyer une information d'avertissement respectivement à un système de gestion du libre-service et à un module d'avertissement, dans le cas où le premier module de détection (201) détecte une carte et le deuxième module de détection (202) détecte une carte contrefaite lorsqu'une opération est effectuée par le système de gestion du libre-service ;
le module d'avertissement (205) étant configuré pour transmettre l'information d'avertissement à l'utilisateur au moyen d'un affichage sur écran ou d'une invite vocale ;
le système (204) de gestion du libre-service étant configuré pour recevoir l'information d'avertissement, suspendre l'activité et appeler un module d'authentification d'utilisateur (206) pour effectuer une authentification d'utilisateur ; et
le module d'authentification d'utilisateur (206) étant configuré pour exécuter une procédure de l'authentification d'utilisateur et envoyer une information au système (204) de gestion du libre-service pour permettre au système (204) de gestion du libre-service de poursuivre l'activité dans le cas où l'authentification de l'utilisateur aboutit à une authentification, ou pour permettre au système (204) de gestion du libre-service de terminer l'activité pour rendre ou conserver la carte dans un cas où l'authentification de l'utilisateur effectuée par le module d'authentification d'utilisateur (206) dans une période de temps prédéfinie n'aboutit pas à une authentification.

8. Le dispositif selon la revendication 7, dans lequel le deuxième module de détection (202) est un module avec une fonction de traitement de carte fournie par un composant matériel du lecteur de carte qui accepte la carte contrefaite sur la base de la présence de la carte contrefaite ou sur la base d'un signal magnétique de la carte contrefaite, ou d'un module fonctionnel dans le lecteur de carte pour détecter un corps étranger.

9. Le dispositif selon la revendication 7 ou la revendication 8, dans lequel le module (206) d'authentification d'utilisateur est un module fonctionnel qui requiert que l'utilisateur ressaisisse un mot de passe d'un compte pour effectuer l'authentification de l'utilisateur.
